# EUROPÄISCHE PATENTSCHRIFT

(11) **EP 0 802 349 B1**
(45) Veröffentlichungstag und Bekanntmachung des Hinweises auf die Patenterteilung: **01.08.2001**
(21) Anmeldenummer: 97105000.0
(22) Anmeldetag: 25.03.1997
(51) Int. Cl.: F16H 3/091

(54) **Wechselgetriebe-Konzept fuer Kraftfahrzeuge**
Change-speed gearbox for motor vehicles
Boîte de vitesses pour véhicules automobiles

(30) Priorität: 16.04.1996 DE 19614930
(43) Veröffentlichungstag der Anmeldung: 22.10.1997
(73) Patentinhaber: Ford Global Technologies, Inc., Dearborn, Michigan 48126-2490 (US)
(72) Erfinder: Fan, Jun, 50259 Pulheim (DE)
(74) Vertreter: Messulam, Alec Moses

(56) Entgegenhaltungen:
- WO-A-96/06291
- DE-A- 3 445 519
- DE-A- 3 729 818
- DE-A- 3 932 264
- DE-A- 4 128 832
- DE-A- 4 226 576

## Beschreibung

Die Erfindung bezieht sich auf ein Wechselgetriebe-Konzept für Kraftfahrzeuge, der im Obergriff des Patentanspruches 1 erläuterten Art.

Aus der DE-PS 34 45 519, insbesondere deren Fig. 1, ist ein Wechselgetriebe-Konzept für Kraftfahrzeuge mit einer Eingangswelle, einer Vorgelegewelle und einer konzentrisch zur Eingangswelle angeordneten, mit ihrem vorderen Ende innerhalb der Eingangswelle gelagerten Ausgangswelle bekannt, wobei auf der Ausgangswelle und der Vorgelegewelle eine Vielzahl von aus jeweils einem Festrad und einem Losrad bestehenden Zahnradpaaren angeordnet sind, mittels denen über benachbarte Synchronisiereinheiten die entsprechenden Gangstufen schaltbar sind.

Bei dem bekannten Wechselgetriebe-Konzept sind die Eingangs- und Ausgangswelle bzw. die Vorgelegewelle dreifach gelagert und auf der Vorgelegewelle ist eine Synchronisiereinheit zum Schalten des 5. Ganges und des Rückwärtsganges vorgesehen.

Das bekannte Wechselgetriebe-Konzept weist jedoch den Nachteil auf, daß das Zahnradpaar für die sogenannte "Konstante" unmittelbar an einer kurzen Eingangswelle und am Eingangsende der Vorgelegewelle für alle nachfolgenden Gangstufen angeordnet ist. Dadurch ergibt sich der Nachteil, daß bei in Neutralstellung befindlichem Getriebe und eingerückter Reibscheibenkupplung die Eingangswelle die Vorgelegewelle ständig antreibt, wodurch über die auf der Vorgelegewelle angeordneten Festräder auch die entsprechenden Losräder auf der Ausgangswelle angetrieben werden, wodurch es im Leerlauf zu unerwünschten Rasselgeräuschenkommt, die sich aus den verschiedenen Verzahnungsfehlern und Spielen zwischen den Verzahnungen ergeben.

Aus der DE-PS 37 29 818, insbesondere deren Fig. 1 ist ein ähnliches Wechselgetriebe-Konzept bekannt, wobei eine Synchronisiereinheit zum Schalten des 5. Ganges und des synchronisierten Rückwärtsganges auf der Ausgangswelle angeordnet ist.

Auch dieses bekannte Wechselgetriebe-Konzept weist den Nachteil auf, daß die sogenannte "Konstante" unmittelbar zwischen einer kurzen Eingangswelle und deren Eingangsende der Vorgelegewelle angeordnet ist und dementsprechend in Leerlaufstellung des Getriebes bei eingerückter Reibscheibenkupplung der gesamte Zahnradblock der Vorgelegewelle umläuft, wodurch durch die mit den Festrädern in Eingriff stehenden Losrädern wieder erhebliche Rasselgeräusche vorursacht werden können.

Die Aufgabe der Erfindung ist es ein Wechselgetriebe-Konzept für Kraftfahrzeuge, der im Oberbegriff des Patentanspruches 1 erläuterten Art derart zu verbessern, daß in Leerlaufstellung des Getriebes geringere Rasselgeräusche auftreten und Getriebeversionen mit fünf und sechs Gängen und einem synchronisierten Rückwärtsgang realisiert werden können, wobei der 5. Gang als direkter Gang ausgebildet wird und dementsprechend einen günstigen Wirkungsgrad, eine niedrige Temperaturentwicklung und ein günstiges Geräuschverhalten aufweist.

Gemäß der Erfindung wird diese Aufgabe gelöst, indem bei einem Wechselgetriebe-Konzept für Kraftfahrzeuge, der im Oberbegriff des Patentansruches 1 erläuterten Art die im Kennzeichenteil des Patentanspruches 1 aufgezeigten Merkmale angewendet werden.

Im Anspruch 2 ist eine günstige Anordnung für einen synchronisierten Rückwärtsgang aufgezeigt.

Dadurch, daß das Zahnradpaar der Konstanten mit einem Losrad auf der Vorgelegewelle und einem Festrad auf der Ausgangswelle und einer Synchronisiereinheit auf der Vorgelegewelle als schaltbare Konstante für die Gänge 1 - 4 ausgelegt ist, der 5. Gang als direkter Gang bei Abkopplung der Vorgelegewelle ausgelegt ist und der 6. Gang als Schnellgang über die Konstante schaltbar ist, wird in Leerlaufstellung des Getriebes das Auftreten von Rasselgeräuschen vermindert, da hier nur die Zahnradpaare für den 1. und 2. Gang mitlaufen. Durch die Ausbildung des 5. Ganges als direkten Gang wird für den für schnelle Fahrt häufig benutzten Getriebegang ein hoher Wirkungsgrad, eine geringe Temperaturentwicklung wegen der niedrigeren Drehzahlen der Zahnräder und ein geringes Geräuschniveau erzielt.

Dadurch, daß der Zahnradsatz für den Rückwärtsgang aus einem Festrad auf der Ausgangswelle, einem Zwischenrad und einem Losrad auf einer koaxial zur Vorlegewelle angeordneten, deren Ende lagernden Bolzenachse angeordneten Losrad besteht und auf der Vorgelegewelle eine Synchronisiereinheit angeordnet ist, die die schaltbare Konstante bzw. den Rückwärtsgang betätigt, wird mit geringem Aufwand der als direkter Gang ausgelegte 5. Gang und der synchronisierte Rückwärtsgang bereitgestellt.

Die Erfindung wird anhand eines in den beiliegenden Zeichnungen gezeigten Ausführungsbeispieles näher erläutert. Es zeigt:
- Fig. 1: das Wechselgetriebe-Konzept für Kraftfahrzeuge in seiner Leerlaufstellung; und die
- Fig. 2 - 8: den Drehmomentenverlauf in den verschiedenen Gangstufen.

Das erfindungsgemäße Wechselgetriebe-Konzept für Kraftfahrzeuge besteht im wesentlichen aus einer Eingangswelle 1 und einer konzentrisch zur Eingangswelle 1 angeordneten Ausgangswelle 2, deren vorderes Ende 3 an der Eingangswelle 1 gelagert ist. Eine Vorgelegewelle 4 ist parallel zur Eingangswelle 1 und zur Ausgangswelle 2 angeordnet und hierzu koaxial ist eine Bolzenachse 5 angeordnet. Das hintere Ende 6 der Vorgelegewelle 4 ist hierbei an der feststehenden Bolzenachse 5 drehbar gelagert abgestützt.

Die verschiedenen Getriebewellen sind hierbei in herkömmlicher Weise in einem Getriebegehäuse (nicht gezeigt) drehbar gelagert angeordnet und diese Lager sind für die Eingangswelle 1 mit den Bezugszeichen 7 und 8, für die Ausgangswelle 2 mit den Bezugszeichen 9 und 10 und für die Vorgelegewelle 4 mit den Bezugszeichen 11, 12 und 13 versehen.

Auf der Eingangswelle 1 ist ein Festrad 14 für den 2. Gang und ein Festrad 16 für den 1. Gang und den Rückwärtsgang angeordnet und mit diesen kämmend sind auf der Vorgelegewelle 4 Losräder 15 und 17 angeordnet, die über eine zwischen ihnen angeordnete Synchronisiereinheit 18 schaltbar sind.

Auf der Eingangswelle 1 sind Losräder 19 für den 4. Gang und 21 für den 3. Gang und eine zwischen ihnen angeordnete Synchronisiereinheit 23 angeordnet. Mit den Losrädern 19 und 21 in Eingriff stehend sind Festräder 20 und 22 auf der Vorgelegewelle 4 angeordnet.

Auf der Eingangswelle 1 ist weiterhin eine Losrad 24 für den 6. Gang angeordnet, das in Eingriff mit einem Festrad 25 auf der Vorgelegewelle 4 steht. Benachbart dem Losrad 24 für den 6. Gang ist eine Synchronisiereinheit 26 angeordnet mit der sowohl der 6. Gang als auch der direkte 5. Gang geschaltet werden kann.

Auf der Vorgelegewelle 4 ist ein Losrad 27 der sogenannten "Konstanten" angeordnet, das in ständigem Eingriff mit einem Festrad 28 auf der Ausgangswelle 2 steht. Benachbart dem Losrad 27 auf der Vorgelegewelle 6 ist eine Synchronisiereinheit 29 angeordnet, mit der einerseits die sogenannte "Konstante" geschaltet werden kann und andererseits über ein auf der feststehenden Bolzenachse 5 angeordnetes Losrad 30, das in ständigem Eingriff mit einem Zwischenrad 31 und einem Festrad 32 auf der Ausgangswelle 2 steht, ein synchronisierter Rückwärtsgang geschaltet werden kann.

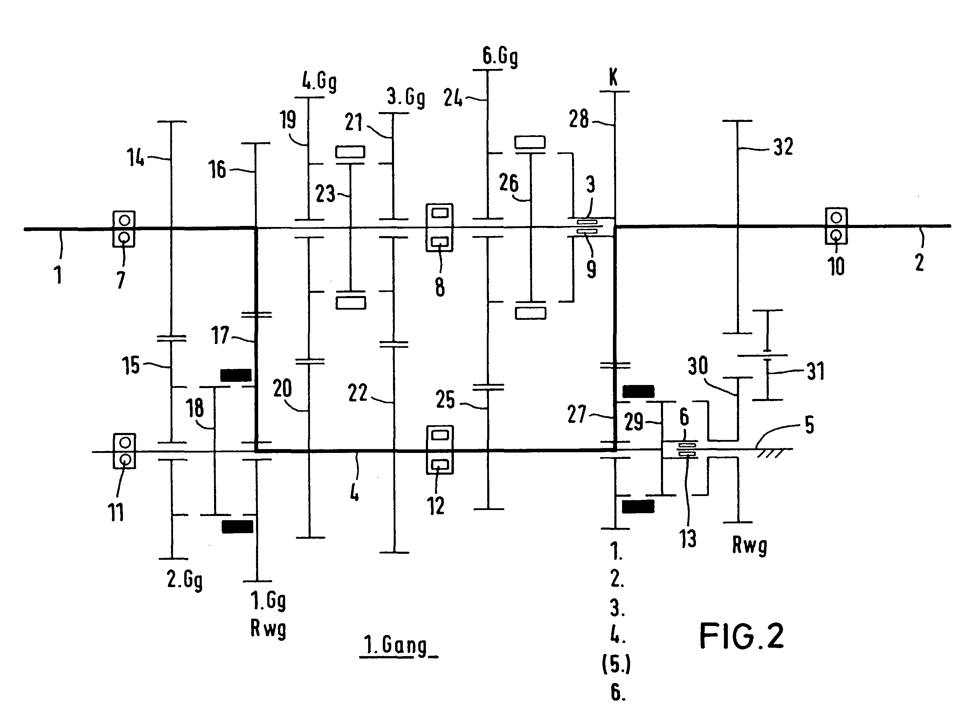

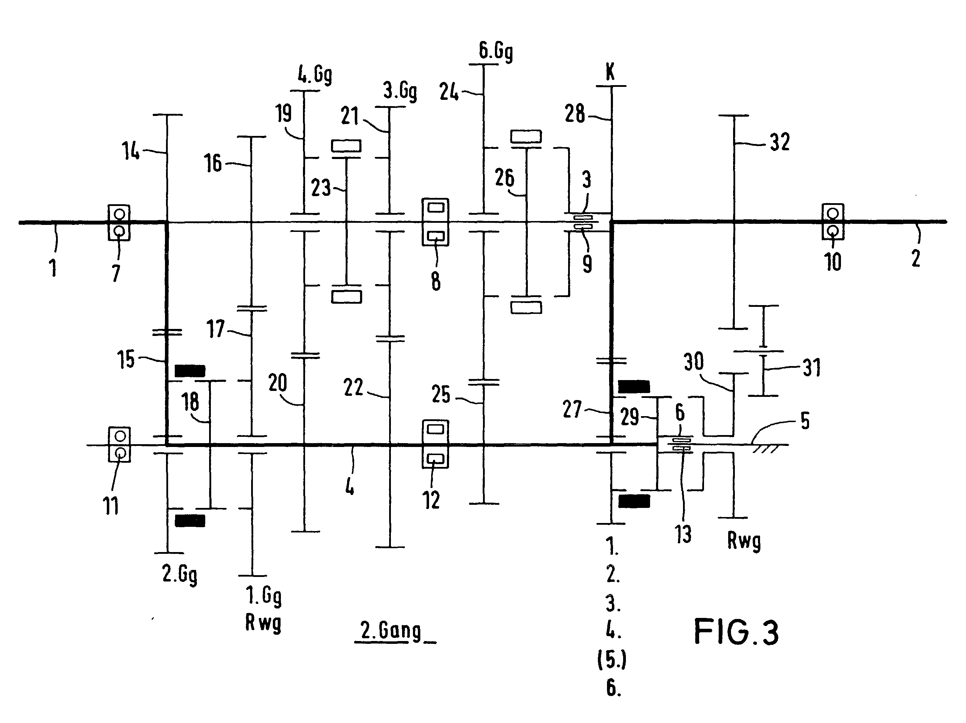

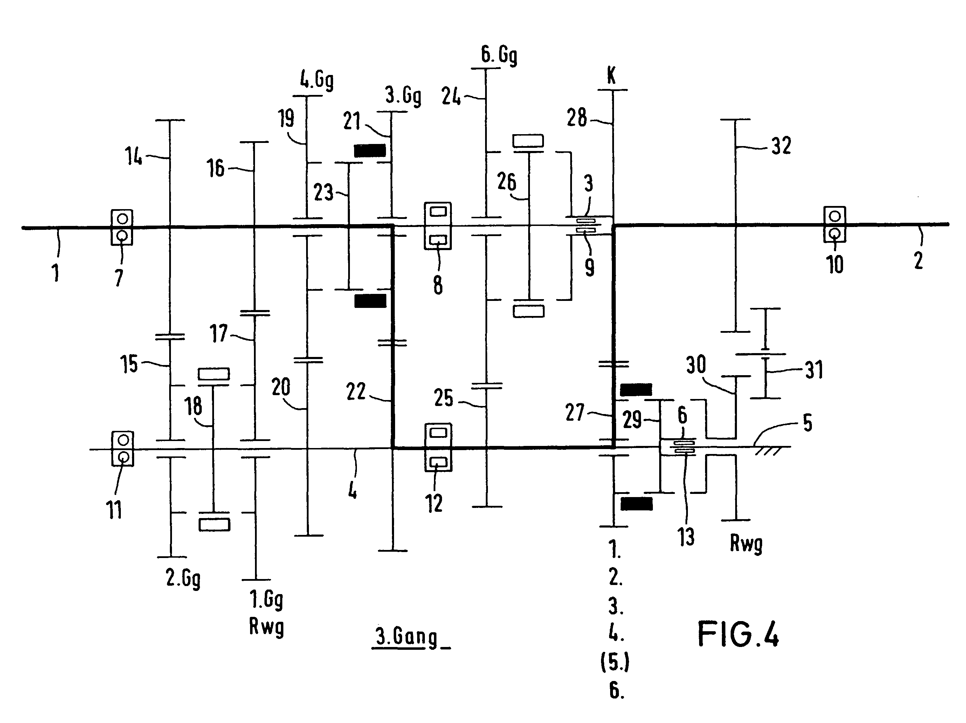

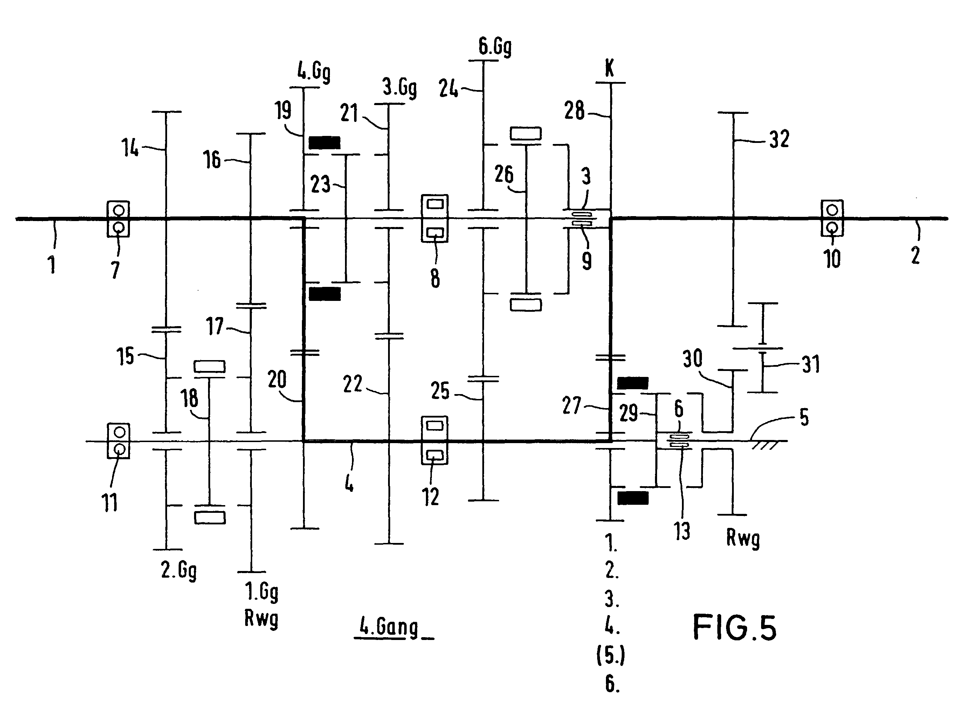

Nachdem in den weiteren Figuren 2 bis 8 stets die gleichen Bezugszeichen vorhanden sind und durch den hervorgehobenen Drehmomentverlauf die in den unterschiedlichen Gangstufen wirksamen Elemente klar aufgezeigt sind, erscheint eine ins einzelne gehende Erläuterung dieser Figuren entbehrlich.

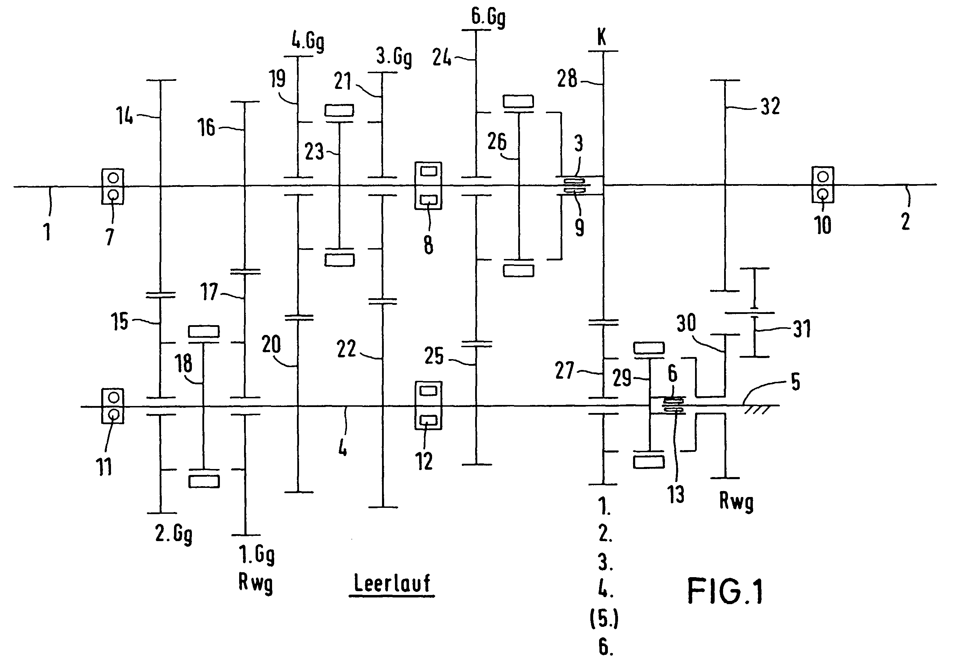

In Zusammenhang mit Fig. 1 wird lediglich nochmals darauf hingewiesen, daß der Vorteil des vorliegenden Wechselgetriebe-Konzepts für Kraftfahrzeuge darin liegt, daß bei Leerlaufstellung des Getriebes und eingerückter Reibscheibenkupplung nur die Zahnradpaare des 1. und 2. Ganges mitlaufen, so daß nur diese Zahnradpaare Rasselgeräusche erzeugen können, die jedoch durch entsprechende Feinarbeit unter Kontrolle gehalten werden können.

Mit Bezugnahme auf die Figuren 2 bis 5 wird darauf hingewiesen, daß zusätzlich zu dem jeweils für die entsprechende Gangstufe erforderlichen Zahnradpaar noch die Zahnstufe der sogenannten "Konstanten" eingerückt werden muß.

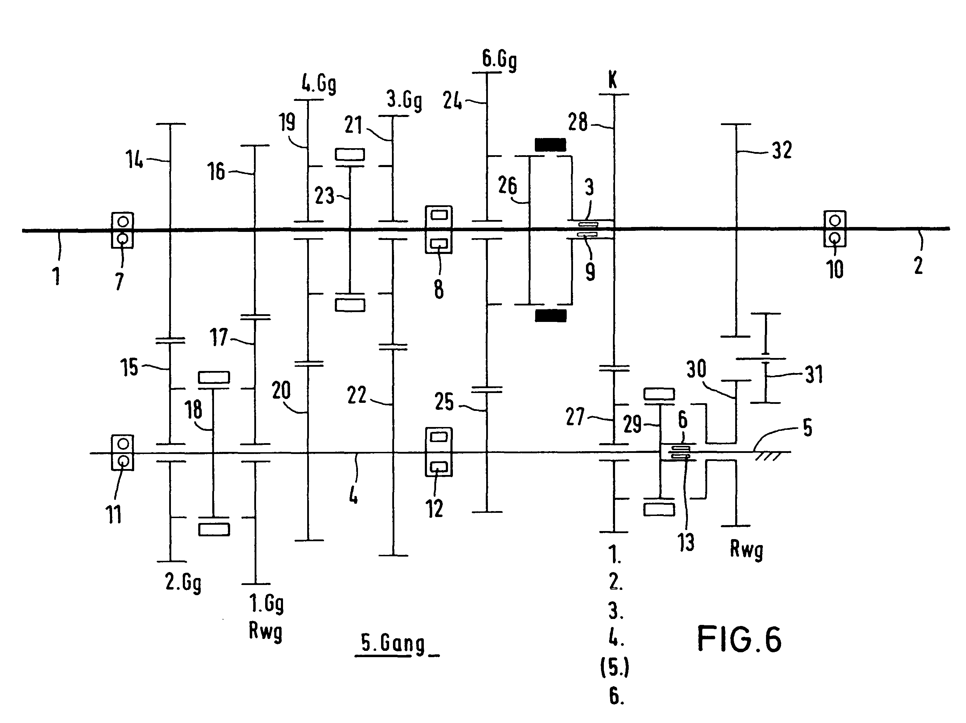

Mit Bezug auf Fig. 6 wird darauf hingewiesen, daß der 5. Gang als direkter Gang ausgelegt ist, wodurch ein hoher Wirkungsgrad , eine geringere Wärmeentwicklung und ein geringes Geräuschniveau bei diesem sehr oft benutzten Gang erzielt wird.

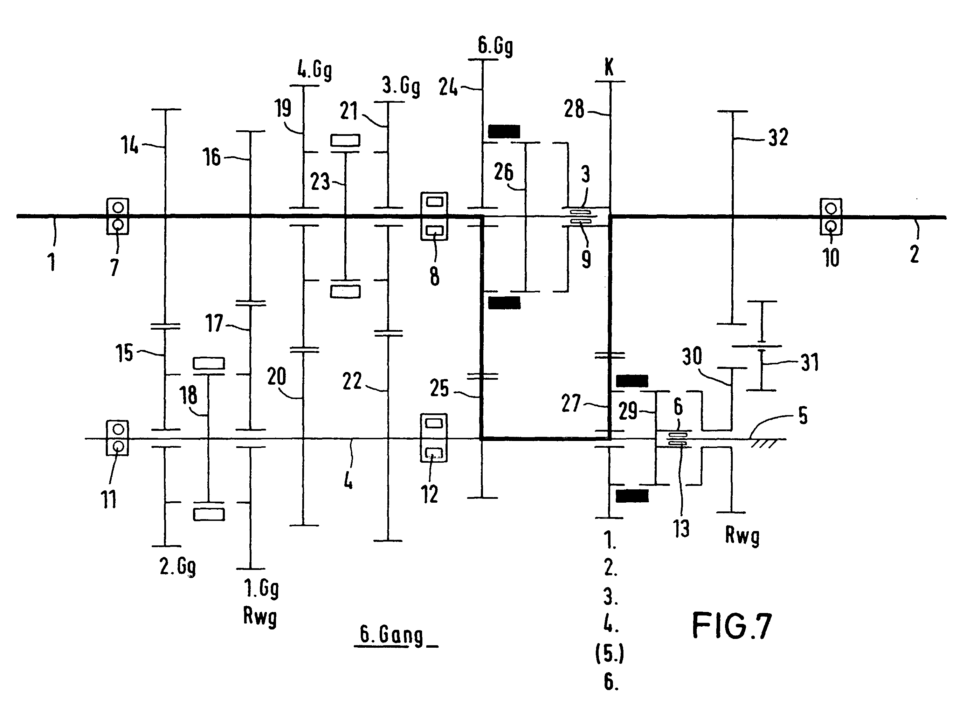

Aus Fig. 7 wird ersichtlich, daß zum Schalten des 6. Ganges zusätzlich zum Zahnradpaar des 6. Ganges noch das Zahnradpaar der "Konstanten" mit herangezogen wird.

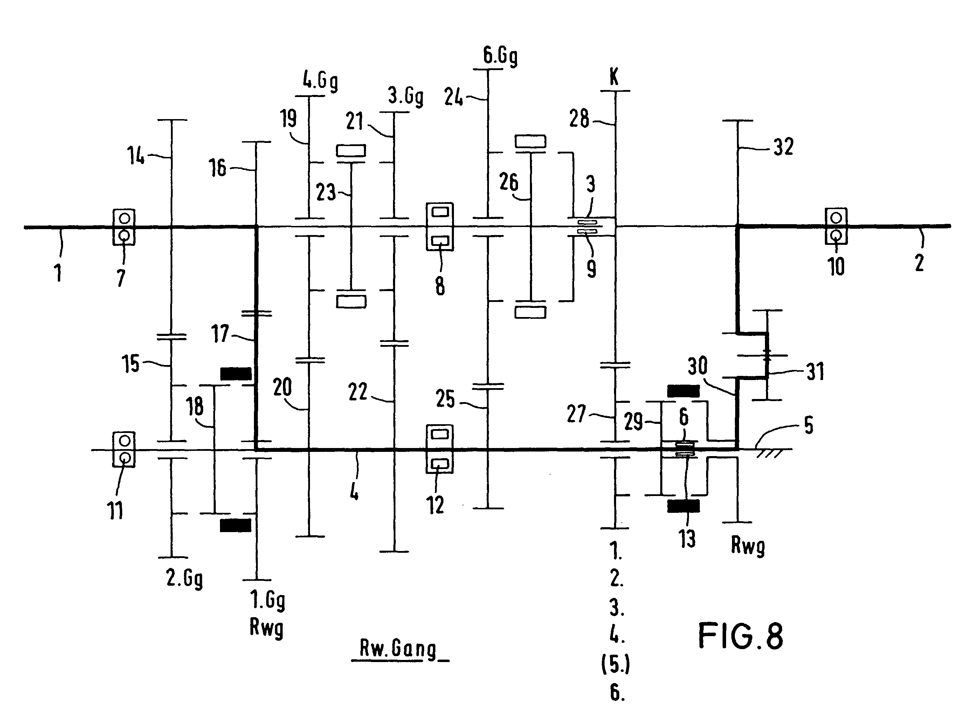

Aus Fig. 8 wird der Drehmomentverlauf für den synchronisierten Rückwärtsgang aufgezeigt, bei dem sowohl die Synchronisiereinheit 18 für den 1. Gang als auch die Synchronisiereinheit 29 für den Rückwärtsgang betätigt werden müssen.

## Patentansprüche

1. Wechselgetriebe-Konzept für Kraftfahrzeuge, mit einer Eingangswelle (1), einer Vorgelegewelle (4) und einer konzentrisch zur Eingangswelle (1) angeordneten, mit ihrem vorderen Ende (3) innerhalb der Eingangswelle (1) gelagerten Ausgangswelle (2), einem zwischen der Eingangs- bzw der Ausgangswelle (1 bzw 2) und der Vorgelegewelle (4) angeordneten, eine sogenannte "Konstante" (K) darstellenden Zahnradpaar (27/28) und einer Vielzahl von auf den Getriebewellen angeordneten, aus jeweils einem Festrad und einem Losrad bestehenden Zahnradpaaren (14/15, 16/17, 20/19, 22/21, 25/24 und 30/31/32) und benachbarten Synchronisiereinheiten (18, 23, 26 und 29) zum Schalten der verschiedenen Gangstufen,
**dadurch gekennzeichnet**, daß
- das Zahnradpaar (27/28) der "Konstanten" (K) mit einem Losrad (27) auf der Vorgelegewelle (4) und einem Festrad (28) auf der Ausgangswelle (2) und mit einer Synchronisiereinheit (29) auf der Vorgelegewelle (4) als schaltbare "Konstante" für die Gänge 1 - 4 und 6 ausgebildet ist,
- der 5. Gang als direkter Gang bei Abkopplung der Vorgelegewelle (4) ausgebildet ist und
- der 6. Gang als Schnellgang über die schaltbare "Konstante" (K) schaltbar ist.

2. Wechselgetriebe nach Anspruch 1,
**dadurch gekennzeichnet,** daß
- der Zahnradsatz (30/31/33) für den Rückwärtsgang aus einem Festrad (32) auf der Ausgangswelle (2), einem Zwischenrad (31) und einem Losrad (30) auf einer koaxialen zur Vorgelegewelle (4) angeordneten, deren hinteres Ende (6) lagernden Bolzenachse (5) besteht und
- über die auf der Vorgelegewelle (4) angeordnete Synchronisiereinheit (29) schaltbar ist.

## Claims

1. Change-speed gearbox for motor vehicles with an input shaft (1), a countershaft (4) and an output shaft (2) positioned concentrically with the input shaft (1) with its front end (3) within the input shaft (1), a pinion pair (27/28) representing a so-called "constant" (K) and positioned between the input / the output shaft (1 / 2) and the countershaft (4) and a multitude of pinion pairs (14/15, 16/17, 20/19, 22/21, 25/24 and 30/31/32) consisting respectively of a fixed wheel and a loose wheel and positioned on the gear shafts, and neighbouring synchronisation units (18, 23, 26 and 29) for shifting the different gear stages,
characterised in that
- the pinion pair (27/28) of the "constants" (K) with a loose wheel (27) on the countershaft (4) and a fixed wheel (28) on the output shaft (2) and with a synchronisation unit (29) on the countershaft (4) is formed as a switchable "constant" for the gears 1 to 4 and 6,
- the 5th gear is formed as a direct gear with decoupling of the countershaft (4) and
- the 6th gear can be shifted as a fast gear via the switchable "constant" (K).

2. Change-speed gearbox according to Claim 1
characterised in that
- the pinion set (30/31/33) for the reverse gear consists of a fixed wheel (32) on the output shaft (2), an intermediate wheel (31) and a loose wheel (30) on a bolt axle (5) positioned coaxially to the countershaft (4) and bearing on its rear end (6) and
- can be shifted via the synchronisation unit (29) positioned on the countershaft (4).

## Revendications

1. Boîte de vitesses pour véhicules automobiles, comprenant un arbre d'entrée (1), un arbre intermédiaire (4) et un arbre de sortie (2) qui est disposé concentriquement à l'arbre d'entrée (1) et est monté, par son extrémité antérieure (3), à l'intérieur dudit arbre d'entrée (1) ; une paire de pignons (27/28) représentant ce qu'on appelle une "constante" (K), interposée entre l'arbre intermédiaire (4) et l'arbre respectif d'entrée ou de sortie (1, respectivement 2) ; un grand nombre de paires de pignons (14/15, 16/17, 20/19, 22/21, 25/24 et 30/31/32), calées sur les arbres de transmission et respectivement constituées d'un pignon fixe et d'un pignon fou ; et des unités voisines de synchronisation (18, 23, 26 et 29) pour enclencher les différents paliers de vitesses,
caractérisée par le fait que
- la paire de pignons (27/28) affectée à la "constante" (K), comprenant un pignon fou (27) sur l'arbre intermédiaire (4) et un pignon fixe (28) sur l'arbre de sortie (2), et coopérant avec une unité de synchronisation (29) sur ledit arbre intermédiaire (4), est réalisée sous la forme d'une "constante" enclenchable pour les première, quatrième et sixième vitesses,
- la cinquième vitesse est conçue comme une vitesse directe lors d'un découplage de l'arbre intermédiaire (4), et
- la sixième vitesse peut être enclenchée, en tant que vitesse rapide, par l'intermédiaire de la "constante" (K) enclenchable.

2. Boîte de vitesses selon la revendication 1,
caractérisée par le fait que
- le jeu de pignons (30/31/32), affecté à la marche arrière, se compose d'un pignon fixe (32) sur l'arbre de sortie (2), d'un pignon de renvoi (31), et d'un pignon fou (30) sur un axe articulé (5) occupant une position coaxiale à l'arbre intermédiaire (4), et assurant le montage de l'extrémité postérieure (6) de ce dernier, et
- peut être enclenché au moyen de l'unité de synchronisation (29) calée sur l'arbre intermédiaire (4).
